# EUROPÄISCHE PATENTSCHRIFT

(11) **EP 0 632 237 B1**
(45) Veröffentlichungstag und Bekanntmachung des Hinweises auf die Patenterteilung: **08.10.1997**
(21) Anmeldenummer: 94107729.9
(22) Anmeldetag: 18.05.1994
(51) Int. Cl.: F24H 3/06, B23K 20/12

(54) **Luftheizgerät für Kleinräume**
Air heater for small spaces
Appareil de chauffage d'air pour petites enceintes

(30) Priorität: 19.05.1993 DE 4316884
(43) Veröffentlichungstag der Anmeldung: 04.01.1995
(73) Patentinhaber: PHILIPP KREIS GmbH & Co. TRUMA-GERÄTEBAU, 85640 Putzbrunn (DE)
(72) Erfinder: Geisreiter, Christian, D-81549 München (DE)
(74) Vertreter: WILHELMS, KILIAN & PARTNER Patentanwälte

(56) Entgegenhaltungen:
- EP-A- 0 395 385
- WO-A-92/20975
- DE-A- 2 612 924
- DE-A- 3 115 790

## Beschreibung

Die Erfindung betrifft ein Luftheizgerät für Kleinräume gemäß dem Oberbegriff des Patentanspruchs 1.

Ein Luftheizgerät dieser Art ist aus WO-A-9 220 975 bekannt.

Bei dem bekannten Gerät erfolgt die Verbindung an den Stirnseiten von zylindrischem Körper des Wärmetauschereinsatzes und von Aufsetzsockel mittels Schrauben unter Zwischenlage von Dichtmitteln, wie Dichtscheiben. Mit einer solchen Verbindung sind nach einer Beaufschlagung des Zwischenraums zwischen Flammrohr und Wärmetauschereinsatz mit einem eine Verpuffung simulierenden hohen Druck die danach geforderten kleinen Leckraten nur unter großem Aufwand bei der Fertigung zu erreichen.

Aufgabe der Erfindung ist daher die Schaffung eines Luftheizgeräts der eingangs genannten Art, bei welchem die angesprochene Verbindung zwischen Wärmetauschereinsatz und bei geringerem Fertigungsaufwand entscheidend verbessert ist.

Diese Aufgabe wird erfindungsgemäß mit einem Luftheizgerät mit den Merkmalen des Patentanspruchs 1 gelöst.

Eine Reibschweißverbindung zwischen Aufsetzsockel und Wärmetauschereinsatz wird überraschenderweise allen Dichtigkeitsanforderungen gerecht. Es mußte nämlich angesichts der bei Aluminiumdruckgußteilen immer vorhandenen Lunker und Poren damit gerechnet werden, daß solche Poren beim Reibschweißen aufgerissen werden bzw. platzen und so eine einwandfreie und dichte Verbindung zwischen den beiden Teilen verhindern. Tatsächlich tritt dieses Problem jedoch nicht auf. Offenbar kommt es bei der beim Reibschweißen üblichen hohen Materialabtragung von mehreren Millimetern auf den zu verschweißenden Teilen zu einem solchen Einfluß auf die Poren bzw. Lunker, daß diese zwar aufgerissen, gleichzeitig aber auch wieder ausgefüllt werden, so daß es zu einer einwandfreien Verbindung der Reibschweißung auch bei Teilen aus Aluminiumdruckguß, bei denen bislang das Reibschweißen vor dem Hintergrund der aufgezeigten Problematik nicht angewandt wurde, kommt.

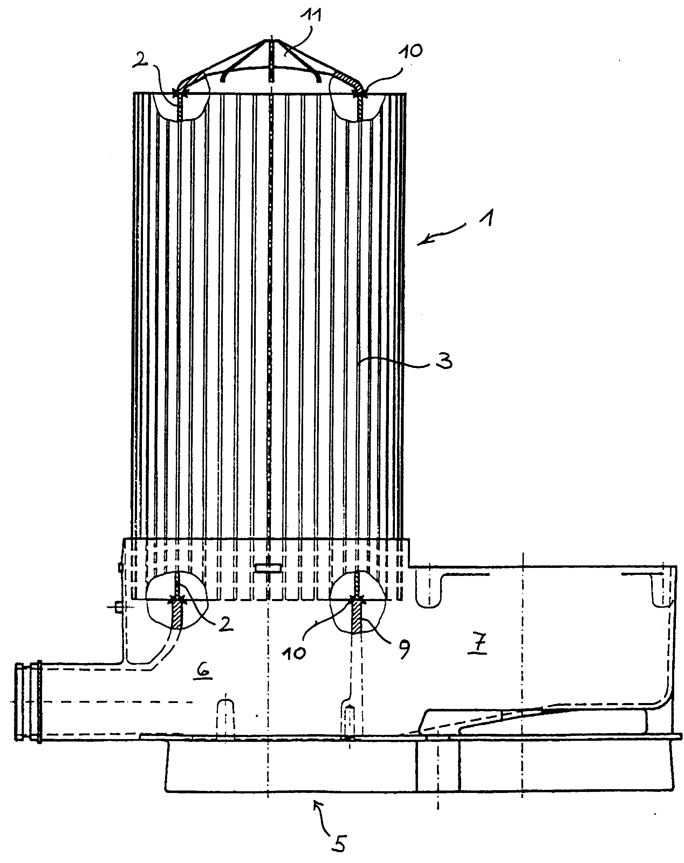

Im folgenden wird eine Ausführungsform der Erfindung anhand der einzigen Figur der beigefügten Zeichnung beschrieben. Diese zeigt ein Luftheizgerät mit einem Wärmetauschereinsatz 1 mit einem zylindrischen Körper 2, von dem sich Wärmetauschlamellen 3 nach außen erstrecken. Im Inneren des zylindrischen Wärmetauschereinsatzes 1 erstreckt sich koaxial dazu ein in der Zeichnung nicht sichtbares Flammrohr, in das der Brenner des Heizgeräts arbeitet. Vom zylindrischen Körper 2 des Wärmetauschereinsatzes erstrecken sich in der Zeichnung ebenfalls nicht sichtbare weitere Wärmetauschlamellen radial nach innen zum Flammrohr.

In einem Basisblock 5 verlaufen der aus dem Ringraum zwischen zylindrischem Körper 2 des Wärmetauschereinsatzes 1 und einem diesen umgebenden, nicht gezeigten Außenmantel kommende Kanal 7 für die zu erwärmende Luft sowie der aus dem Zwischenraum zwischen Flammrohr und dem zylindrischen Körper 2 des Wärmetauschereinsatzes 1 kommende Abgaskanal 6.

Der Abgaskanal 6 endet im Basisblock 5 wärmetauschereinsatzseitig in einem zylindrischen Aufsetzsockel 9, dessen Durchmesser dem Durchmesser des zylindrischen Körpers 2 des Wärmetauschereinsatzes 1 entspricht. Die Stirnseiten von zylindrischem Körper 2 und Aufsetzsockel 9 sind durch eine Reibschweißverbindung 10 miteinander verbunden.

An der basisblockfernen Stirnseite des Wärmetauschereinsatzes ist dieser durch einen Deckel 11 abgeschlossen, welcher auf dem zylindrischen Körper 2 aufsitzt und mit diesem ebenfalls durch eine Reibschweißverbindung 10 verbunden ist. Der Basisblock 5 ist ein Aluminiumdruckgußteil, während es sich bei dem Wärmetauschereinsatz 1 mit Vorteil um ein Aluminiumstrangpreßteil handelt. Der Begriff Aluminiumteil schließt selbstverständlich auch Teile aus einer Aluminiumlegierung ein.

## Patentansprüche

1. Luftheizgerät für Kleinräume, insbesondere fahrbare Räume wie Caravans, Wohnmobile, Boote und dergleichen, mit einer von einem zylindrischen Flammrohr gebildeten Brennkammer, einem das Flammrohr umgebenden Wärmetauschereinsatz (1), welcher durch einen zylindrischen Körper (2) mit nach innen zum Flammrohr und nach außen gerichteten Wärmetauschlamellen (3) ausgebildet ist, und mit einem als Aluminiumdruckgußteil ausgebildeten Basisblock (5), in welchem Abgas-und Erwärmungsluftkanäle (6, 7) ausgebildet sind und welcher einen einen Teil des Abgaskanals bildenden zylindrischen Aufsetzsockel (9) aufweist, der stirnseitig mit einer Stirnseite des zylindrischen Körpers (2) des Wärmetauschereinsatzes (1) verbunden ist, dadurch gekennzeichnet, daß die Verbindung von Aufsetzsockel (9) und zylindrischem Körper (2) durch eine Reibschweißverbindung (10) gebildet ist.

2. Luftheizgerät nach Anspruch 1, dadurch gekennzeichnet, daß ein den zylindrischen Körper (2) auf der basisblockfernen Seite abschließender das Flammrohr übergreifender Deckel (11) vorgesehen ist, welcher mit dem zylindrischen Körper durch eine Reibschweißverbindung (10) verbunden ist.

## Claims

1. Air heater for small areas, in particular moveable areas such as caravans, motor caravans, boats and similar, with a combustion chamber formed by a cylindrical flame tube, a heat exchanger insert (1) surrounding the flame tube which is constructed by a cylindrical body (2) with heat exchange blades (3) directed inwards towards the flame tube and outwards, and with a base block (5) constructed as an aluminium casting, in which exhaust gas and heating air ducts (6, 7) are provided, and which has a cylindrical attachment base (9) forming part of the exhaust gas duct, said attachment base being connected on the face side to a face of the cylindrical body (2) of the heat exchanger insert (1), characterised in that the connection of the attachment base (9) and the cylindrical body (2) is formed by a friction welded connection (10).

2. Air heater according to Claim 1, characterised in that a cover (11) closing off the cylindrical body (2) on the side remote from the base block and engaging over the flame tube is provided, which is connected to the cylindrical body via a friction welded connection (10).

## Revendications

1. Appareil de chauffage d'air pour petites pièces, en particulier des locaux mobiles tels que caravanes, camping-cars, bateaux et similaires, équipé d'une chambre de combustion formée par un tube de flamme cylindrique, d'une insertion d'échangeur de chaleur (1) entourant le tube de flamme, qui est formée par un corps (2) cylindrique avec des lamelles d'échange de chaleur (3) dirigées vers l'intérieur du tube de flamme et vers l'extérieur, et d'un bloc de base (5) formé comme une pièce en aluminium injectée sous pression, dans lequel sont formés des canaux pour les gaz brûlés et pour l'air de réchauffement (6, 7) et qui présente un socle de pose (9) cylindrique formant une partie du canal des gaz brûlés, lequel socle est relié sur l'avant à une face frontale du corps (2) cylindrique de l'insertion d'échangeur de chaleur (1), caractérisé en ce que la liaison du socle de pose (9) et le corps (2) cylindrique est formée par un assemblage soudé par friction (10).

2. Appareil de chauffage d'air selon la revendication 1, caractérisé en ce qu'il est prévu un couvercle (11) terminant le corps (2) cylindrique du côté éloigné du bloc de base et chevauchant le tube de flamme, qui est relié au corps cylindrique par un assemblage soudé par friction (10).
